# EUROPÄISCHE PATENTSCHRIFT

(11) **EP 4 431 913 B1**
(45) Veröffentlichungstag und Bekanntmachung des Hinweises auf die Patenterteilung: **25.02.2026**
(21) Anmeldenummer: 24162035.0
(22) Anmeldetag: 07.03.2024
(51) Int. Cl.: G01N 21/31, G01N 21/33, G01N 21/3577, G01N 21/3504

(54) **SPEKTROSKOPISCHE ANALYSEVORRICHTUNG MIT EINER MEHRKAMMERKÜVETTE ZUR FLUID- ODER GASANALYSE UND ENTSPRECHENDES VERFAHREN**
SPECTROSCOPIC ANALYSIS DEVICE COMPRISING A MULTI-CHAMBER CUVETTE FOR FLUID OR GAS ANALYSIS, AND CORRESPONDING METHOD
DISPOSITIF D'ANALYSE SPECTROSCOPIQUE COMPRENANT UNE CUVETTE À CHAMBRES MULTIPLES POUR L'ANALYSE DE FLUIDE OU DE GAZ ET PROCÉDÉ CORRESPONDANT

(30) Priorität: 17.03.2023 DE 102023106820
(43) Veröffentlichungstag der Anmeldung: 18.09.2024
(73) Patentinhaber: Endress+Hauser SICK GmbH+Co. KG, 01458 Ottendorf-Okrilla (DE)
(72) Erfinder: Hagemann, Benjamin, 79263 Simonswald (DE); Warratz, Ralf, 22339 Hamburg (DE)
(74) Vertreter: Manitz Finsterwald Patent- und Rechtsanwaltspartnerschaft mbB

(56) Entgegenhaltungen:
- DE-U1- 202019 101 137
- DE-U1- 202021 104 857
- US-B2- 6 940 083

## Beschreibung

Die Erfindung betrifft eine spektroskopische Analysevorrichtung mit einer Mehrkammerküvette zur Fluid- oder Gasanalyse und ein entsprechendes Verfahren.

Derzeit werden Küvetten in Gasanalysegeräten eingesetzt. Um mit einer Küvette mehrere Gasbestandteile erfassen zu können, werden heutzutage beispielsweise abwechselnd verschiedene Strahlungswellenlängen eingebracht. Die Strahlungswellenlängen können dabei im UV-Bereich oder IR-Bereich liegen. Dies erfolgt z.B. über entsprechende Lichtquellen. Das Licht wird auf einer Seite der Küvette eingebracht, wobei auf der gegenüberliegenden Seite die ausfallende Strahlungsintensität gemessen wird. Zu analysierendes Gas absorbiert je nach enthaltenen Komponenten und deren Konzentration verschiedene Wellenlängenbereiche unterschiedlich stark, sodass die Strahlungsintensität auf der Empfängerseite entsprechend reduziert wird. Dadurch ist eine zuverlässige Detektion der entsprechenden Gasbestandteile (über die Wellenlängen) und deren Konzentration (über die Intensität) möglich.

Um unterschiedliche Wellenlängen bereitstellen zu können, sind optische Filter bekannt, die mechanisch in den Strahlengang eingeschwenkt werden können. Dadurch können weitere Informationen gewonnen werden. Dies erhöht jedoch die Komplexität des Messeaufbaus, führt zu höheren Kosten, wobei gleichzeitig mehr Bauraum benötigt wird und wobei die Anfälligkeit des Gesamtsystems gegenüber Fehlern erhöht wird. Darüber hinaus reduziert sich die Dynamik und die Genauigkeit des Messsystems, da das Einschwenken der Filter zusammen mit dem eigentlichen Messschritt eine weitere zeitliche Reduktion aller anderen Messungen ohne Filter bewirkt. Auf der Empfängerseite sind zudem optische Elemente erforderlich, um die aus der Küvette austretende Strahlung auf die je nach Anwendungsfall verwendeten Detektoren zu fokussieren. Auch dies benötigt Bauraum und verursacht Kosten.

Die DE 20 2019 101 137 U1 betrifft eine Analysevorrichtung gemäß dem Oberbegriff von Anspruch 1.

Die DE 20 2021 104 857 U1 beschreibt eine Analysevorrichtung zum Ermitteln einer Konzentration zumindest von Stickstoffmonoxid in einem Gasgemisch. Die Analysevorrichtung umfasst in einer Ausführungsform ein Messkammerpaar, wobei in einer Messkammer des Messkammerpaars das Messgas einführbar ist und wobei in der anderen Messkammer des Messkammerpaars ein Referenzmessgas enthalten ist. In einer anderen Ausführungsform umfasst die Analysevorrichtung zwei derartige Messkammerpaare, wobei die beiden Messkammerpaare getrennt voneinander angeordnet sind.

Die US 6 940 083 B2 offenbart eine Analysevorrichtung mit zwei verbundenen Messkammern.

Es ist daher die Aufgabe der hier vorliegenden Erfindung eine spektroskopische Analysevorrichtung zu schaffen, die robuster gegenüber denjenigen aus dem Stand der Technik aufgebaut ist und durch die kürzere Messzeiten möglich sind bzw. alternativ eine höhere Messgenauigkeit möglich ist.

Die Aufgabe wird bezüglich der spektroskopischen Analysevorrichtung gemäß dem unabhängigen Anspruch 1 gelöst.

Die erfindungsgemäße spektroskopische Analysevorrichtung umfasst eine Mehrkammerküvette zu Fluid- oder Gasanalyse. Die Mehrkammerküvette weist zumindest zwei Messkammern auf, in die das Fluid oder Gas zu Analyse einbringbar ist. Die zumindest zwei Messkammern sind optisch voneinander getrennt. Dies bedeutet, dass Licht, welches durch eine Messkammer gesendet wird, nicht, wie beispielsweise durch eine optisch durchlässige Wand, in die zweite Messkammer überkoppeln kann. Es ist weiterhin eine Beleuchtungseinrichtung vorgesehen, die dazu ausgebildet ist, um Licht zu erzeugen und in die zumindest eine erste und zweite Messkammer einzukoppeln. Außerdem ist eine Detektionseinrichtung vorgesehen, die dazu ausgebildet ist, um eine Intensität des durch das Fluid oder Gas in der ersten Messkammer gestrahlten (transmittiert) Lichts für eine erste Wellenlänge zu messen und ein erstes Messergebnis zu erzeugen. Weiterhin ist die Detektionseinrichtung dazu ausgebildet, um eine Intensität des durch das Fluid oder Gas in der zweiten Messkammer gestrahlten Lichts für eine zweite Wellenlänge zu messen und ein zweites Messergebnis zu erzeugen. Die erste Wellenlänge und die zweite Wellenlänge sind dabei unterschiedlich.

Es ist besonders vorteilhaft, dass eine Mehrkammerküvette verwendet wird, die zumindest zwei Messkammern umfasst. Dadurch kann das zu analysierende Fluid oder Gas simultan mit zwei verschiedenen Wellenlängen oder Wellenlängenbereichen untersucht werden. So kann besonders schnell festgestellt werden, welche Stoffe in dem Fluid oder Gas enthalten bzw. nicht enthalten sind. Dadurch wird eine höhere Messdynamik, sowie eine höhere Genauigkeit erreicht als bei Gasanalysegeräten aus dem Stand der Technik.

Durch Einsatz von zumindest zwei Messkammern wird ein räumliches Multiplexing erreicht, wobei gleichzeitig auf einschwenkbare Filter verzichtet werden kann. Durch Wegfall entsprechender bewegliche Elemente (z.B. Chopperrad oder Filterrad) wird die Robustheit der Analysevorrichtung erhöht. Es wird betont, dass die spektroskopische Analysevorrichtung natürlich auch mehr als zwei Messkammern umfassen kann. So kann die spektroskopische Analysevorrichtung drei, vier oder mehr als vier Messkammern umfassen. Es ist besonders vorteilhaft, dass das Licht, welches durch die erste Messkammer strahlt spätestens in der Detektionseinrichtung frei von Anteilen der zweiten Wellenlänge ist. Umgekehrt gilt ebenfalls, dass das Licht, welches durch die zweite Messkammer strahlt, spätestens in der Detektionseinrichtung frei von Anteilen der ersten Wellenlänge ist. Wie später noch erläutert wird, kann das Licht bereits derart erzeugt werden, dass es die unerwünschten Anteile nicht erhält (schmalbandiges Licht) oder die unerwünschten Anteile werden auf der Übertragungsstrecke durch eine entsprechende Filteranordnung herausgefiltert.

Anstelle der ersten Wellenlänge kann auch ein erster Wellenlängenbereich und anstelle der zweiten Wellenlänge auch ein zweiter Wellenlängenbereich verwendet bzw. verstanden werden. Sämtliche Offenbarungen zu der ersten und zweiten Wellenlänge gelten entsprechend auch für den ersten und zweiten Wellenlängenbereich. Die Wellenlängenbereiche können jeweils zusammenhängende Bereiche und/oder nicht zusammenhängende Bereiche von Wellenlängen umfassen. Die Wellenlängenbereiche können erfindungsgemäß unterschiedlich sein. Unterschiedliche Wellenlängenbereiche können beispielsweise keine gemeinsamen Wellenlängen aufweisen oder sich in zumindest jeweils einer Wellenlänge unterscheiden.

Das durch eine Messkammer (z.B. die erste oder zweite Messkammer) gestrahlte Licht kann auch nur Licht der ersten Wellenlänge oder nur des ersten Wellenlängenbereichs oder nur Licht der zweiten Wellenlänge oder nur des zweiten Wellenlängenbereichs umfassen.

**In** einer vorteilhaften Weiterbildung der Analysevorrichtung ist die Mehrkammerküvette ein Strangpressteil, vorzugsweise aus extrudiertem Aluminium. Dadurch kann die Mehrkammerküvette besonders kostengünstig hergestellt werden. Die Mehrkammerküvette umfasst Metall oder eine Metalllegierung oder besteht aus Metall bzw. einer Metalllegierung. Das Material, welches die Mehrkammerküvette umfasst, ist für die erste Wellenlänge und die zweite Wellenlänge undurchsichtig.

Erfindungsgemäß ist die Mehrkammerküvette ein einteiliges Strangpressteil, vorzugsweise aus extrudiertem Aluminium. In diesem Fall sind die erste Messkammer und die zweite Messkammer aus einem gemeinsamen Teil gebildet. Vorzugsweise sind die erste Messkammer und die zweite Messkammer durch eine einzige gemeinsame Trennwand voneinander getrennt. Mit anderen Worten, die erste Messkammer und die zweite Messkammer sind lediglich durch genau eine Trennwand voneinander getrennt. Vorzugsweise sind die erste Messkammer und die zweite Messkammer gleich lang und/oder haben die gleiche Querschnittsfläche.

In einer vorteilhaften Weiterbildung der Analysevorrichtung sind die erste Messkammer und die zweite Messkammer innerhalb der Analysevorrichtung oder innerhalb der Mehrkammerküvette voneinander getrennt, sodass kein Austausch des Fluids oder Gases von der ersten Messkammer in die zweite Messkammer innerhalb der Analysevorrichtung oder innerhalb der Mehrkammerküvette möglich ist.

In einer vorteilhaften Weiterbildung der Analysevorrichtung ist die Detektionseinrichtung dazu ausgebildet, um das erste Messergebnis und das zweite Messergebnis parallel zu erzeugen. Dadurch können die Messergebnisse unmittelbar miteinander verglichen werden.

In einer vorteilhaften Weiterbildung der Analysevorrichtung umfasst die Mehrkammerküvette zumindest eine erste und eine zweite Referenzmesskammer. Weiterhin ist die Beleuchtungseinrichtung dazu ausgebildet, um Licht in die zumindest eine erste und zweite Referenzmesskammer einzukoppeln. Die Detektionseinrichtung ist dazu ausgebildet, um eine Intensität des durch die erste Referenzmesskammer gestrahlten (transmittierten) Lichts für die erste Wellenlänge zu messen und ein erstes Referenzmessergebnis zu erzeugen. Weiterhin ist die Detektionseinrichtung dazu ausgebildet, um eine Intensität des durch die zweite Referenzmesskammer gestrahlten Lichts für die zweite Wellenlänge zu messen und ein zweites Referenzmessergebnis zu erzeugen. Bevorzugt umfasst jede Messkammer eine dazu korrespondierende Referenzmesskammer. Durch die Referenzmesskammer ist eine Plausibilitätsüberprüfung oder eine Korrektur des ersten bzw. zweiten Messergebnisses möglich. Es ist besonders vorteilhaft, dass das Licht, welches durch die erste Referenzmesskammer strahlt spätestens in der Detektionseinrichtung frei von Anteilen der zweiten Wellenlänge ist. Umgekehrt gilt ebenfalls, dass das Licht, welches durch die zweite Referenzmesskammer strahlt, spätestens in der Detektionseinrichtung frei von Anteilen der ersten Wellenlänge ist. Wie später noch erläutert wird, kann das Licht bereits derart erzeugt werden, dass es die unerwünschten Anteile nicht erhält (schmalbandiges Licht) oder die unerwünschten Anteile werden auf der Übertragungsstrecke durch eine entsprechende Filteranordnung herausgefiltert.

Erfindungsgemäß ist die Mehrkammerküvette ein einteiliges Strangpressteil, vorzugsweise aus extrudiertem Aluminium. In diesem Fall sind die erste Messkammer, die zweite Messkammer, die erste Referenzmesskammer und die zweite Referenzmesskammer aus einem gemeinsamen Teil gebildet. Vorzugsweise sind die erste Messkammer, die zweite Messkammer, die erste Referenzmesskammer und die zweite Referenzmesskammer gleich lang und/oder haben die gleiche Querschnittsfläche. Vorzugsweise ist jede Kammer durch eine einzige Trennwand von zumindest einer anderen Kammer getrennt. Mit andere Worten handelt es sich dann bei der Trennwand um eine gemeinsame Trennwand.

In einer vorteilhaften Weiterbildung der Analysevorrichtung sind die erste und die zweite Referenzmesskammer optisch voneinander und optisch von der ersten und zweiten Messkammer getrennt. Dadurch ist sichergestellt, dass eingekoppeltes Licht nicht mit Licht in anderen Messkammern wechselwirken und so die Messergebnisse verfälschen kann.

In einer vorteilhaften Weiterbildung der Analysevorrichtung ist die Detektionseinrichtung dazu ausgebildet, um das erste Messergebnis mit dem ersten Referenzmessergebnis zu kompensieren. Weiterhin ist die Detektionseinrichtung dazu ausgebildet, um das zweite Messergebnis mit dem zweiten Referenzmessergebnis zu kompensieren. Unter "kompensieren" wird insbesondere verstanden, dass die Empfindlichkeit der Detektionseinrichtung entsprechend kalibriert oder die Degradation der Lichtquelle berücksichtigt wird. Dadurch kann die Intensität des durch die erste bzw. zweite Messkammer gestrahlten Lichts genauer gemessen werden.

In einer vorteilhaften Weiterbildung der Analysevorrichtung ist die Detektionseinrichtung dazu ausgebildet, um das erste Messergebnis zeitlich zu Mitteln und um das zweite Messergebnis zeitlich zu Mitteln. Bevorzugt wird dabei das jeweils kompensierte erste bzw. zweite Messergebnis zeitlich gemittelt.

In einer vorteilhaften Weiterbildung ist die erste Referenzmesskammer frei von dem zu analysierenden Fluid oder Gas. Ergänzend oder alternativ umfasst die erste Referenzmesskammer ein Referenzfluid oder ein Referenzgas. Bei dem Referenzgas kann es sich beispielsweise um normale Luft oder Stickstoff handeln. Dadurch kann die Empfindlichkeit der Detektionseinrichtung, die das durch die erste Referenzmesskammer transmittierte Licht erfasst, ermittelt werden. Ergänzend ist die zweite Referenzmesskammer frei von dem zu analysierenden Fluid oder Gas. Ergänzend oder alternativ umfasst die zweite Referenzmesskammer ein Referenzfluid oder ein Referenzgas. Bei dem Referenzgas kann es sich beispielsweise um normale Luft handeln. Dadurch kann die Empfindlichkeit der Detektionseinrichtung, die das durch die zweite Referenzmesskammer transmittierte Licht erfasst, ermittelt werden.

In einer vorteilhaften Weiterbildung der Analysevorrichtung sind die erste Messkammer und die erste Referenzmesskammer identisch zueinander aufgebaut. Ergänzend oder alternativ sind die zweite Messkammer und die zweite Referenzmesskammer identisch zueinander aufgebaut. Ergänzend oder alternativ sind die zumindest eine erste Messkammer und die zweite Messkammer identisch zueinander aufgebaut. Ergänzend oder alternativ sind die zumindest eine erste Referenzmesskammer und die zweite Referenzmesskammer identisch zueinander aufgebaut. Unter dem Wortlaut "identisch" ist zu verstehen, dass die jeweiligen Kammern dasselbe Volumen und/oder dieselbe Querschnittsfläche umfassen, bzw. dass das Volumen und/oder die Querschnittsfläche der jeweiligen Kammern um weniger als 10% oder um weniger als 5% voneinander abweichen. Vorzugsweise ist ebenfalls der Weg, den das Licht durch die jeweilige Messkammer bzw. Referenzmesskammer zurücklegt, gleich lang.

In einer vorteilhaften Weiterbildung der Analysevorrichtung ist eine erste Filteranordnung vorgesehen und dazu ausgebildet, um Wellenlängen aus dem von der Beleuchtungseinrichtung erzeugten Licht herauszufiltern, sodass das Licht, welches durch die erste Messkammer und durch die erste Referenzmesskammer gestrahlt wird, spätestens (bezogen auf den Weg) in der Detektionseinrichtung nur noch die erste Wellenlänge oder den ersten Wellenlängenbereich beinhaltet. Ergänzend oder alternativ ist eine zweite Filteranordnung vorgesehen und dazu ausgebildet, um Wellenlängen aus dem von der Beleuchtungseinrichtung erzeugten Licht herauszufiltern, sodass das Licht, welches durch die zweite Messkammer und durch die zweite Referenzmesskammer gestrahlt wird, spätestens (bezogen auf den Weg) in der Detektionseinrichtung nur noch die zweite Wellenlänge oder den zweiten Wellenlängenbereich beinhaltet. Die erste Filteranordnung ist dabei für die zweite Wellenlänge undurchlässig und die zweite Filteranordnung ist dabei für die erste Wellenlänge undurchlässig.

In einer vorteilhaften Weiterbildung der Analysevorrichtung umfasst die erste Filteranordnung einen optischen Filter oder einen gasgefüllten Filter. Ergänzend oder alternativ umfasst die zweite Filteranordnung einen optischen Filter oder einen gasgefüllten Filter. Welche Art von Filter verwendet wird kann beispielsweise von der Wellenlänge abhängen, die der Filter durchlassen bzw. herausfiltern soll.

In einer vorteilhaften Weiterbildung der Analysevorrichtung ist die erste Filteranordnung ortsfest in der spektroskopischen Analysevorrichtung angeordnet, wobei die erste Filteranordnung für Licht der ersten Wellenlänge durchlässig und für Licht der zweiten Wellenlänge undurchlässig ist. Die erste Filteranordnung ist:
a) zwischen der Beleuchtungseinrichtung und der ersten Messkammer; oder
b) innerhalb der ersten Messkammer; oder
c) zwischen der ersten Messkammer und der Detektionseinrichtung; oder
d) innerhalb der Detektionseinrichtung;

angeordnet. Weiterhin ist die erste Filteranordnung:
   a) zwischen der Beleuchtungseinrichtung und der ersten Referenzmesskammer;
      oder
   b) innerhalb der ersten Referenzmesskammer; oder
   c) zwischen der ersten Referenzmesskammer sowie der Detektionseinrichtung;
      oder
   d) innerhalb der Detektionseinrichtung;
angeordnet.

Unter dem Wortlaut "ortsfest" ist verstehen, dass die erste Filteranordnung nicht automatisiert tauschbar bzw. motorisch verfahrbar ist. Bevorzugt ist die erste Filteranordnung zwischen andere Elemente eingeklemmt, sodass für einen etwaigen Tausch der ersten Filteranordnung erst andere Elemente demontiert werden müssen. Dadurch wird ein kompakter und damit kostengünstiger Aufbau realisiert. Die erste Filteranordnung kann ein einteilig aufgebautes Filterelement umfassen oder mehrere getrennte Filterelemente. Alternativ kann auch eine Klebung vorgesehen sein, insbesondere zur Erzielung einer gasdichten Verbindung.

In einer vorteilhaften Weiterbildung der Analysevorrichtung ist eine zweite Filteranordnung ortsfest in der spektroskopischen Analysevorrichtung angeordnet, wobei die zweite Filteranordnung für Licht der zweiten Wellenlänge durchlässig und für Licht der ersten Wellenlänge undurchlässig ist. Die zweite Filteranordnung ist:
a) zwischen der Beleuchtungseinrichtung und der zweiten Messkammer; oder
b) innerhalb der zweiten Messkammer; oder
c) zwischen der zweiten Messkammer und der Detektionseinrichtung; oder
d) innerhalb der Detektionseinrichtung;

angeordnet. Weiterhin ist die zweite Filteranordnung:
   a) zwischen der Beleuchtungseinrichtung und der zweiten Referenzmesskammer;
      oder
   b) innerhalb der zweiten Referenzmesskammer; oder
   c) zwischen der zweiten Referenzmesskammer sowie der Detektionseinrichtung;
      oder
   d) innerhalb der Detektionseinrichtung;
angeordnet.

Unter dem Wortlaut "ortsfest" ist verstehen, dass die zweite Filteranordnung nicht automatisiert tauschbar bzw. motorisch verfahrbar ist. Bevorzugt ist die zweite Filteranordnung zwischen andere Elemente eingeklemmt, sodass für einen etwaigen Tausch der zweiten Filteranordnung erst andere Elemente demontiert werden müssen. Dadurch wird ein kompakter und damit kostengünstiger Aufbau realisiert. Die zweite Filteranordnung kann ein einteilig aufgebautes Filterelement umfassen oder mehrere getrennte Filterelemente. Alternativ kann auch eine Klebung vorgesehen sein, insbesondere zur Erzielung einer gasdichten Verbindung.

In einer vorteilhaften Weiterbildung der Analysevorrichtung ist die Beleuchtungseinrichtung dazu ausgebildet, um ein breitbandiges Licht zu erzeugen, welches zumindest Licht der ersten und Licht der zweiten Wellenlänge beinhaltet. In diesem Fall ist eine entsprechende erste bzw. zweite Filteranordnung notwendig.

In einer vorteilhaften Weiterbildung der Analysevorrichtung ist die Beleuchtungseinrichtung dazu ausgebildet, um ein Licht zu erzeugen, welches zumindest Licht der ersten und der zweiten Wellenlänge beinhaltet und wobei die zumindest eine Beleuchtungseinrichtung dazu ausgebildet ist, um das erzeugte Licht in die zumindest eine erste und zweite Messkammer und in die zumindest eine erste und zweite Referenzmesskammer einzukoppeln, wobei die Einkopplung beispielsweise über Lichtwellenleiter erfolgt.

In einer vorteilhaften Weiterbildung der Analysevorrichtung umfasst die Beleuchtungseinrichtung genau eine Lichtquelle oder mehrere Lichtquellen.

In einer vorteilhaften Weiterbildung der Analysevorrichtung umfasst die Beleuchtungseinrichtung zumindest eine erste und eine zweite Lichtquelle, wobei die erste Lichtquelle dazu ausgebildet ist, um Licht mit lediglich der ersten Wellenlänge zu erzeugen und wobei die zumindest eine erste Lichtquelle weiter dazu ausgebildet ist, um das erzeugte Licht in die erste Messkammer und in die erste Referenzmesskammer einzukoppeln. Unter dem Wortlaut "mit lediglich der ersten Wellenlänge" ist zu verstehen, dass ein schmalbandiges Licht erzeugt wird, welches bevorzugt zwar die erste Wellenlänge, nicht aber die zweite Wellenlänge beinhaltet. Die zweite Lichtquelle ist dazu ausgebildet, um Licht mit lediglich der zweiten Wellenlänge zu erzeugen und wobei die zumindest eine zweite Lichtquelle weiter dazu ausgebildet ist, um das erzeugte Licht in die zweite Messkammer und in die zweite Referenzmesskammer einzukoppeln. Unter dem Wortlaut "mit lediglich der zweiten Wellenlänge" ist zu verstehen, dass ein schmalbandiges Licht erzeugt wird, welches bevorzugt zwar die zweite Wellenlänge, nicht aber die erste Wellenlänge beinhaltet. **In** einer weiteren Ausführungsform wäre auch denkbar, dass z.B. das schmalbandige Licht der zweiten Wellenlänge vollständig oder teilweise innerhalb des Wellenlängenbereichs des schmalbandigen Lichts der ersten Wellenlänge liegt. **In** einer weiteren Ausführungsform wäre auch denkbar, dass z.B. das schmalbandige Licht der ersten Wellenlänge vollständig oder teilweise innerhalb des Wellenlängenbereichs des schmalbandigen Lichts der zweiten Wellenlänge liegt.

**In** einer vorteilhaften Weiterbildung der Analysevorrichtung ist die Beleuchtungseinrichtung dazu ausgebildet, um Licht mit der ersten Wellenlänge in die erste Messkammer und in die erste Referenzmesskammer jeweils mittig einzukoppeln und um Licht mit der zweiten Wellenlänge in die zweite Messkammer und in die zweite Referenzmesskammer jeweils mittig einzukoppeln. Die mittige Einkopplung wird über je einen Lichtwellenleiter realisiert, der jeweils im Zentrum einer ersten Stirnseite der jeweiligen Messkammer bzw. Referenzmesskammer angeordnet ist.

**In** einer vorteilhaften Weiterbildung der Analysevorrichtung ist die Beleuchtungseinrichtung dazu ausgebildet, um das Licht an der ersten Stirnseite in die erste Messkammer einzukoppeln, wobei das durch die erste Messkammer transmittierte Licht an einer gegenüberliegenden Stirnseite aus der ersten Messkammer ausgekoppelt und der ersten Detektionseinrichtung zugeführt wird. Weiterhin ist die Beleuchtungseinrichtung dazu ausgebildet, um das Licht an einer ersten Stirnseite in die erste Referenzmesskammer einzukoppeln, wobei das durch die erste Referenzmesskammer transmittierte Licht an einer gegenüberliegenden Stirnseite aus der ersten Referenzmesskammer ausgekoppelt und der ersten Detektionseinrichtung zugeführt wird. Die erste Detektionseinrichtung ist dabei dazu ausgebildet, um das Licht, welches durch die erste Meskammer transmittiert und das Licht, welches durch die erste Referenzmesskammer transmittiert wird, getrennt voneinander auszuwerten. Ergänzend oder alternativ gilt vorstehendes auch für die zweite Messkammer und die zweite Referenzmesskammer.

**In** einer vorteilhaften Weiterbildung der Analysevorrichtung die Beleuchtungseinrichtung zumindest eine erste Lichtquelle, insbesondere genau eine erste Lichtquelle, die dazu ausgebildet ist, um erstes Licht mit der ersten Wellenlänge zu erzeugen. Die erste Lichtquelle ist direkt derart an der ersten Messkammer und der ersten Referenzmesskammer angeordnet, sodass das erzeugte erste Licht sowohl in die erste Messkammer als auch in die erste Referenzmesskammer einstrahlt. Alternativ ist die erste Lichtquelle beabstandet zur ersten Messkammer und zu ersten Referenzmesskammer angeordnet, sodass das erzeugte erste Licht über je einen ersten Lichtwellenleiter der ersten Messkammer und der ersten Referenzmesskammer zuführbar ist. Ergänzend umfasst die Beleuchtungseinrichtung zumindest eine zweite Lichtquelle, insbesondere genau eine zweite Lichtquelle, die dazu ausgebildet ist, um zweites Licht mit der zweiten Wellenlänge zu erzeugen. Die zweite Lichtquelle ist direkt derart an der zweiten Messkammer und der zweiten Referenzmesskammer angeordnet, sodass das erzeugte zweite Licht sowohl in die zweite Messkammer als auch in die zweite Referenzmesskammer einstrahlt. Alternativ ist die zweite Lichtquelle beabstandet zur zweiten Messkammer und zu zweiten Referenzmesskammer angeordnet, sodass das erzeugte zweite Licht über je einen zweiten Lichtwellenleiter der zweiten Messkammer und der zweiten Referenzmesskammer zuführbar ist.

**In** einer vorteilhaften Weiterbildung der Analysevorrichtung umfasst die Detektionseinrichtung für die erste Messkammer und die erste Referenzmesskammer zur Detektion von Licht mit der ersten Wellenlänge jeweils eine Photodiode oder (je) einen pyroelektrischen Detektor oder (je) einen Bildsensor oder (je) einen optopneumatischen Detektor. Die Art des Detektionselements hängt insbesondere von der Wellenlänge des zu detektieren Lichts ab. Ergänzend oder alternativ umfasst die Detektionseinrichtung für die zweite Messkammer und die zweite Referenzmesskammer zur Detektion von Licht mit der zweiten Wellenlänge jeweils eine Photodiode oder (je) einen pyroelektrischen Detektor oder (je) einen Bildsensor oder (je) einen optopneumatischen Detektor. Die Art des Detektionselements hängt insbesondere von der Wellenlänge des zu detektierenden Lichts ab.

Alternativ hierzu umfasst die Detektionseinrichtung zur Detektion von Licht mit der ersten Wellenlänge einen gemeinsamen ersten Bildsensor, der dazu ausgebildet ist, um gleichzeitig sowohl das durch die erste Messkammer als auch das durch die erste Referenzmesskammer hindurchgestrahlte Licht zu empfangen. Ergänzend oder alternativ hierzu umfasst die Detektionseinrichtung zur Detektion von Licht mit der zweiten Wellenlänge einen gemeinsamen ersten Bildsensor, der dazu ausgebildet ist, um gleichzeitig sowohl das durch die zweite Messkammer als auch das durch die zweite Referenzmesskammer hindurchgestrahlte Licht zu empfangen.

Alternativ hierzu umfasst die Detektionseinrichtung zur Detektion von Licht mit der ersten und zweiten Wellenlänge einen gemeinsamen Bildsensor. Der gemeinsame Bildsensor ist dazu ausgebildet, um gleichzeitig sowohl das durch die erste und zweite Messkammer als auch das durch die erste und zweite Referenzmesskammer hindurchgestrahlte Licht zu empfangen. Die Auswertung erfolgt dabei bevorzugt ebenfalls parallel.

**In** einer vorteilhaften Weiterbildung der Analysevorrichtung handelt es sich bei dem Bildsensor um einen Flächensensor oder einen Zeilensensor.

In einer vorteilhaften Weiterbildung der Analysevorrichtung wird der erste Bildsensor genutzt, um gleichzeitig das Licht der ersten und der zweiten Messkammer sowie der ersten und zweiten Referenzmesskammer zu empfangen. Die unterschiedlich bestrahlten Bereiche des Bildsensors können in dieser Weiterbildung unabhängig voneinander parallel oder seriell ausgelesen werden.

In einer vorteilhaften Weiterbildung der Analysevorrichtung umfasst der Bildsensor ein Substrat, welches insbesondere Silicium aufweist. Auf dem Substrat ist eine Halbleiterschicht angeordnet, die dazu ausgebildet ist, um eine Vielzahl von Pixeln zu bilden. Auf den jeweiligen Pixel sind vorzugsweise Mikrolinsen angebracht. Auf den Mikrolinsen ist ein, vorzugsweise einteiliges, Abdeckglas angeordnet. Auf dem Abdeckglas ist vorzugsweise eine Lumogen-Beschichtung zumindest teilflächig aufgebracht.

In einer vorteilhaften Weiterbildung der Analysevorrichtung ist die Analysevorrichtung dazu ausgebildet, um der ersten Messkammer und der zweiten Messkammer dasselbe Fluid oder dasselbe Gas zuzuführen. Dadurch kann die Analyse des Fluids oder des Gases, aufgrund der parallelen Messung mit verschiedenen Wellenlängen, deutlich beschleunigt durchgeführt werden. Alternativ hierzu ist die Analysevorrichtung dazu ausgebildet, um der ersten Messkammer und der zweiten Messkammer unterschiedliches Fluid oder unterschiedliches Gas zuzuführen. Dadurch können zwei verschiedene Fluide oder Gase parallel analysiert werden.

In einer vorteilhaften Weiterbildung der Analysevorrichtung ist die Analysevorrichtung frei von einem Chopper- und/oder Filterrad. Dadurch wird die Robustheit der Analysevorrichtung erhöht.

In einer vorteilhaften Weiterbildung der Analysevorrichtung ist die zumindest eine erste Referenzmesskammer und/oder die zweite Referenzmesskammer frei von einem Anschluss zu Zufuhr eines Fluids oder Gases. Dadurch ist sichergestellt, dass sich die Eigenschaften der Referenzmesskammer nicht ändern.

In einer weiteren vorteilhaften Ausbildung der Analysevorrichtung umfasst die zumindest eine erste Referenzmesskammer und/oder die zweite Referenzmesskammer eine Vorrichtung, die dazu ausgebildet ist, um eventuell eintretende Störkomponenten aus dem optischen Pfad zu beseitigen.

In einer vorteilhaften Weiterbildung der Analysevorrichtung umfassen die zumindest eine erste Messkammer und die zweite Messkammer einen Eingangsanschluss, um der jeweiligen zumindest einen ersten und zweiten Messkammer das zu analysierendes Fluid oder Gas zuzuführen. Weiterhin umfassen die zumindest eine erste Messkammer und die zweite Messkammer einen Ausgangsanschluss, um aus der jeweiligen zumindest einen ersten und zweiten Messkammer das zu analysierende Fluid oder Gas abzuführen. Vorzugsweise sind zumindest die Eingangsanschlüsse miteinander verbunden, sodass dasselbe Fluid oder Gas der zumindest einen ersten und zweiten Messkammer zuführbar ist. Optional können auch die Ausgangsanschlüsse miteinander verbunden sein.

In einer vorteilhaften Weiterbildung der Analysevorrichtung sind der Eingangsanschluss und der Ausgangsanschluss der jeweiligen Messkammer in Längsrichtung der Messkammer versetzt zueinander angeordnet, wobei das Licht die jeweilige Messkammer ebenfalls in Längsrichtung durchläuft. Dadurch wird das zu analysierende Fluid oder Gas lange in den Strahlungsweg des Lichts eingebracht, wodurch das erste bzw. zweite Messergebnis besonders genau ist.

Weiterer Gegenstand der Erfindung ist ein Verfahren gemäß Anspruch 14. Das Verfahren dient zur spektroskopischen Analyse von Fluid oder Gas und nutzt eine Mehrkammerküvette, wobei die Mehrkammerküvette ein einteiliges Strangpressteil ist und zumindest zwei Messkammern umfasst, in das Fluid oder Gas zur Analyse einbringbar ist. Die zumindest zwei Messkammern sind optisch voneinander getrennt, wobei weiterhin eine Beleuchtungseinrichtung und eine Detektionseinrichtung vorgesehen sind. In einem ersten Verfahrensschritt wird Licht durch die Beleuchtungseinrichtung erzeugt und in die erste und zweite Messkammer eingekoppelt. In einem zweiten Verfahrensschritt wird eine Intensität des durch das Fluid oder Gas in der ersten Messkammer gestrahlten Lichts für eine erste Wellenlänge gemessen und ein erstes Messergebnis erzeugt. In einem dritten Verfahrensschritt wird eine Intensität des durch das Fluid oder Gas in der zweiten Messkammer gestrahlten Lichts für eine zweite Wellenlänge gemessen und ein zweites Messergebnis erzeugt, wobei die erste Wellenlänge und die zweite Wellenlänge unterschiedlich sind. Der zweite und der dritte Verfahrensschritt werden vorzugsweise gleichzeitig ausgeführt und fortlaufend wiederholt.

Nachfolgend wird die Erfindung rein beispielhaft unter Bezugnahme auf die Zeichnungen beschrieben. Es zeigen:
- Figur 1:: ein Ausführungsbeispiel der spektroskopischen Analysevorrichtung mit einer Mehrkammerküvette;
- Figuren 2, 3, 4:: verschiedene Ausführungsbeispiele der spektroskopischen Analysevorrichtung in einer Explosionsdarstellung;
- Figur 5:: ein Ausführungsbeispiel der spektroskopischen Analysevorrichtung mit einer Mehrkammerküvette, die eine erste und zweite Messkammer und eine erste und zweite Referenzmesskammer umfasst;
- Figuren 6A, 6B, 6C, 6D:: verschiedene Querschnittsformen der Mehrkammerküvette der spektroskopischen Analysevorrichtung; und
- Figur 7:: ein Flussdiagramm, welches ein Verfahren zur spektroskopischen Analyse beschreibt.

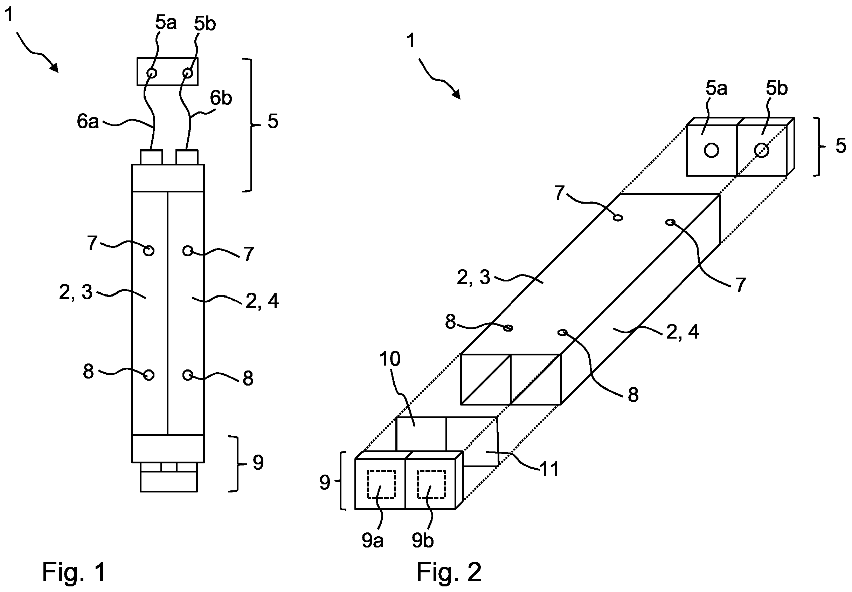

Figur 1 zeigt ein Ausführungsbeispiel der spektroskopischen Analysevorrichtung 1. Die spektroskopische Analysevorrichtung 1 umfasst eine Mehrkammerküvette 2 zur Fluid- oder Gasanalyse. Dient die spektroskopische Analysevorrichtung 1 lediglich zur Gasanalyse, so kann auch von einer spektroskopischen Gasanalysevorrichtung 1 gesprochen werden.

Die Mehrkammerküvette 2 umfasst eine erste Messkammer 3 und eine zweite Messkammer 4. Die erste Messkammer 3 und die zweite Messkammer 4 sind optisch voneinander getrennt. Weiterhin ist eine Beleuchtungseinrichtung 5 dargestellt. Die Beleuchtungseinrichtung 5 ist dazu ausgebildet, um Licht zu erzeugen und in die zumindest eine erste und zweite Messkammer 3, 4 einzukoppeln. In Figur 1 umfasst die Beleuchtungseinrichtung 5 zwei Lichtquellen 5a, 5b. Die erste Lichtquelle 5a ist dazu ausgebildet, um Licht einer ersten Wellenlänge zu erzeugen. Die zweite Lichtquelle 5b ist dazu ausgebildet, um Licht mit einer zweiten Wellenlänge zu erzeugen. Beide Wellenlängen sind dabei unterschiedlich. Die erste Lichtquelle 5a ist über einen ersten Lichtwellenleiter 6a mit der ersten Messkammer 3 verbunden, sodass Licht, welches durch die erste Lichtquelle 5a erzeugt wird, in die erste Messkammer 3 einkoppelt. Die zweite Lichtquelle 5b ist über einen zweiten Lichtwellenleiter 6b mit der zweiten Messkammer 4 verbunden, sodass Licht, welches durch die zweite Lichtquelle 5b erzeugt wird, in die zweite Messkammer 4 einkoppelt. Vorzugsweise findet das Einkoppeln des Lichts an einer jeweiligen Stirnseite der ersten bzw. zweiten Messkammer 3, 4 statt.

Bei der ersten Wellenlänge kann es sich zum Beispiel um IR-Licht oder UV-Licht handeln. Bei der zweiten Wellenlänge kann es sich zum Beispiel um UV-Licht oder IR-Licht handeln. Es ist auch denkbar, dass sowohl die erste Wellenlänge als auch die zweite Wellenlänge Licht im IR-Bereich oder UV-Bereich beinhalten.

Das Licht strahlt in diesem Fall innerhalb der ersten bzw. zweiten Messkammer 2, 3 von einer Stirnseite zur gegenüberliegenden zweiten Stirnseite. Die erste Messkammer 3 ist dazu ausgebildet, damit ein zu analysierende Fluid oder Gas in die erste Messkammer 3 in den Strahlengang des eingekoppelten Lichts einbringbar ist. Vorzugsweise kann die gesamte erste Messkammer 3 mit dem zu analysierenden Fluid oder Gas gefüllt sein. Es ist auch möglich, dass lediglich ein Teil der ersten Messkammer 3 mit dem zu analysierenden Fluid oder Gas gefüllt ist. Die zweite Messkammer 4 ist ebenfalls dazu ausgebildet, damit ein zu analysierende Fluid oder Gas in die zweite Messkammer 4 in den Strahlengang des eingekoppelten Lichts einbringbar ist. Vorzugsweise kann die gesamte zweite Messkammer 4 mit dem zu analysierenden Fluid oder Gas gefüllt sein. Es ist auch möglich, dass lediglich ein Teil der zweiten Messkammer 4 mit dem zu analysierenden Fluid oder Gas gefüllt ist. Vorzugsweise werden die erste Messkammer 3 und die zweite Messkammer 4 mit demselben Fluid oder demselben Gas gefüllt, sodass eine entsprechende Analyse durch parallelen Einsatz unterschiedlicher Wellenlängen besonders schnell durchgeführt werden kann.

Das zu analysierende Fluid oder Gas kann in die zumindest eine erste Messkammer 3 bzw. zweite Messkammer 4 über einen Eingangsanschluss 7 zugeführt werden. Bevorzugt umfassen die erste Messkammer 3 und die zweite Messkammer 4 einen Ausgangsanschluss 8, um aus das analysierte Fluid oder Gas wieder abzuführen. In Längsrichtung der jeweiligen ersten bzw. zweiten Messkammer 3, 4 sind der Eingangsanschluss 7 und der Ausgangsanschluss 8 versetzt zueinander angeordnet, wobei der Eingangsanschluss 7 vorzugsweise näher an der Beleuchtungseinrichtung 5 angeordnet ist als der Ausgangsanschluss 8.

Die spektroskopische Analysevorrichtung 1 umfasst außerdem eine Detektionseinrichtung 9, die dazu ausgebildet ist, um eine Intensität des durch das Fluid oder Gas gestrahlten Lichts zu messen und ein entsprechendes Messergebnis auszugeben. Die Detektionseinrichtung 9 ist daher dazu ausgebildet, um die Intensität des Lichts für eine erste Wellenlänge zu messen, welches durch die erste Messkammer 3 strahlt, um hieraus ein erstes Messergebnis zu erzeugen. Die Detektionseinrichtung 9 ist ferner dazu ausgebildet, um die Intensität des Lichts für eine zweite Wellenlänge zu messen, welches durch die zweite Messkammer 4 strahlt, um hieraus ein zweites Messergebnis zu erzeugen.

In Figur 1 umfasst dasjenige Licht, welches die erste Lichtquelle 5a erzeugt bevorzugt lediglich die erste Wellenlänge und ist insbesondere frei von der zweiten Wellenlänge. Dadurch wird die erste Messkammer 3 lediglich von Licht der ersten Wellenlänge durchsetzt, sodass das erste Messergebnis lediglich die Intensität des Lichts der ersten Wellenlänge beinhaltet. Weiterhin umfasst dasjenige Licht, welches die zweite Lichtquelle 5b erzeugt bevorzugt lediglich die zweite Wellenlänge und ist insbesondere frei von der ersten Wellenlänge. Dadurch wird die zweite Messkammer 4 lediglich von Licht der zweiten Wellenlänge durchsetzt, sodass das zweite Messergebnis lediglich die Intensität des Lichts der zweiten Wellenlänge beinhaltet. Der Einsatz weiterer Filteranordnungen ist in diesem Fall nicht notwendig.

Die Detektionseinrichtung 9 schließt vorzugsweise bündig an eine zweite Stirnseite der ersten bzw. zweiten Messkammer 3, 4 an. Vorzugsweise verschließt die Detektionseinrichtung 9 die zweite Stirnseite der ersten bzw. zweiten Messkammer 3, 4 fluiddicht oder gasdicht. Eine entsprechende Dichtgummianordnung kann noch vorgesehen sein. Auf der anderen Seite verschließt vorzugsweise die Beleuchtungseinrichtung 5 die erste Stirnseite der ersten bzw. zweiten Messkammer 3, 4 fluiddicht oder gasdicht. Eine entsprechende Dichtgummianordnung kann noch vorgesehen sein. Alternativ kann die Küvette auch mit einem anderen Bauteil gasdicht/fluiddicht verschlossen sein.

Die Detektionseinrichtung 9 kann mit einer übergeordneten Leit- oder Steuereinrichtung verbunden sein. Die Detektionseinrichtung 9 kann dazu ausgebildet sein, um der übergeordneten Leit- und Steuereinrichtung das erste Messergebnis und das zweite Messergebnis zu übertragen. Vorzugsweise ist die Detektionseinrichtung 9 dazu ausgebildet, um das erste Messergebnis und das zweite Messergebnis parallel zu erzeugen. Insbesondere werden das erste Messergebnis und das zweite Messergebnis zeitlich gemittelt.

Figur 2 zeigt ein Ausführungsbeispiel der spektroskopischen Analysevorrichtung 1 in einer Explosionsdarstellung. Im Unterschied zu Figur 1 schließt die Beleuchtungseinrichtung 5 bündig mit der ersten Stirnseite der Mehrkammerküvette 2 ab. Die Beleuchtungseinrichtung 5 ist frei von Lichtwellenleitern. Sowohl die erste Lichtquelle 5a als auch die zweite Lichtquelle 5b erzeugen ein breitbandiges Licht, welches neben der gewünschten Wellenlänge noch Licht einer ungewünschten Wellenlänge enthält. So kann es sein, dass die erste Lichtquelle 5a Licht mit der ersten Wellenlänge erzeugt und in die erste Messkammer 3 einkoppelt, jedoch auch Licht mit einer unerwünschten, insbesondere mit der zweiten Wellenlänge, erzeugt. Ebenfalls kann die zweite Lichtquelle 5b Licht mit der zweiten Wellenlänge erzeugen und in die zweite Messkammer 4 einkoppeln. Jedoch kann die zweite Lichtquelle 5b auch Licht mit einer unerwünschten, insbesondere mit der ersten Wellenlänge, erzeugen.

Die Beleuchtungseinrichtung 5 umfasst vorzugsweise zumindest eine Laserdiode. Insbesondere umfassen die erste Lichtquelle 5a und/oder die zweite Lichtquelle 5b vorzugsweise eine Laserdiode. Die erste Lichtquelle 5a und/oder die zweite Lichtquelle 5b kann auch zumindest eine LED oder zumindest eine IR Lichtquelle umfassen.

Um aussagekräftige und genaue erste bzw. zweite Messergebnisse zu bekommen, sind noch eine erste und zweite Filteranordnung 10, 11 vorgesehen. In Figur 2 ist die erste Filteranordnung 10 zwischen der ersten Messkammer 3 und der Detektionseinrichtung 9 angeordnet. Die erste Filteranordnung 10 ist dazu ausgebildet, um zumindest die zweite Wellenlänge aus dem Licht herauszufiltern, welches die erste Lichtquelle 5a in die erste Messkammer 3 einkoppelt. Die zweite Filteranordnung 11 ist zwischen der zweiten Messkammer 4 und der Detektionseinrichtung 9 angeordnet. Die zweite Filteranordnung 11 ist dazu ausgebildet, um zumindest die erste Wellenlänge aus dem Licht herauszufiltern, welches die zweite Lichtquelle 5b in die zweite Messkammer 4 einkoppelt.

Die Detektionseinrichtung 9 umfasst außerdem ein erstes Detektorelement 9a, welches dazu ausgebildet ist, um eine Intensität von Licht mit der ersten Wellenlänge zu messen. Bei dem ersten Detektorelement 9a kann es sich beispielsweise um eine Photodiode, einen pyroelektrischen Detektor oder einen Bildsensor handeln. Die Detektionseinrichtung 9 umfasst außerdem ein zweites Detektorelement 9b, welches dazu ausgebildet ist, um eine Intensität von Licht mit der zweiten Wellenlänge zu messen. Bei dem zweiten Detektorelement 9b kann es sich beispielsweise um eine Photodiode, einen pyroelektrischen Detektor oder einen Bildsensor handeln.

Das Ausführungsbeispiel aus Figur 2 zeigt ebenfalls, dass die Mehrkammerküvette 2 und damit die erste Messkammer 3 und die zweite Messkammer 4 ein Strangpressteil ist. Die erste Messkammer 3 und die zweite Messkammer 4 sind vorzugsweise gleich lang.

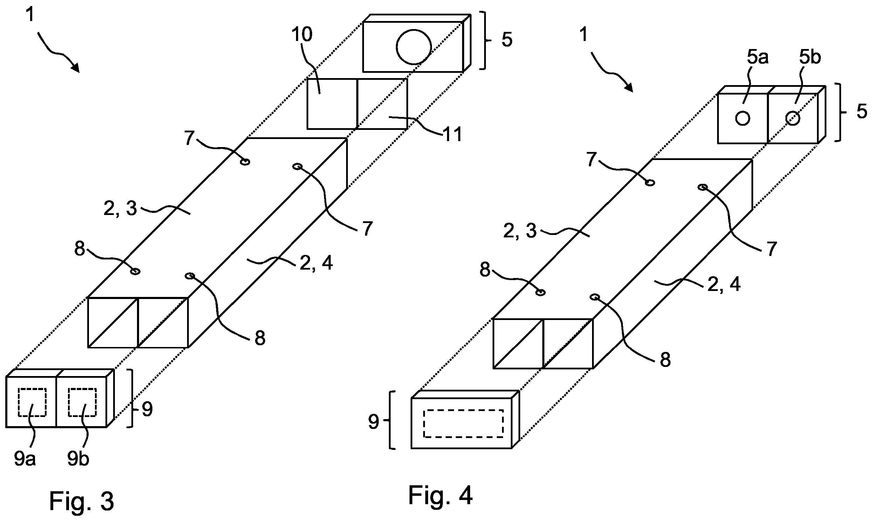

In Figur 3 umfasst die Beleuchtungseinrichtung 5 eine gemeinsame Lichtquelle, die dazu ausgebildet ist, um ein breitbandiges Licht mit zumindest der ersten Wellenlänge und der zweiten Wellenlänge zu erzeugen. In dem Ausführungsbeispiel aus Figur 3 ist die erste Filteranordnung 10 zwischen der Beleuchtungseinrichtung 5 und der ersten Messkammer 3 angeordnet. Weiterhin ist die zweite Filteranordnung 11 zwischen der Beleuchtungseinrichtung 5 und der zweiten Messkammer 4 angeordnet. Im Gegensatz zu dem Ausführungsbeispiel aus Figur 2 wird in dem Ausführungsbeispiel aus Figur 3 das bereits gefilterte Licht in die einzelnen Messkammern 3, 4 eingekoppelt.

In dem Ausführungsbeispiel aus Figur 4 ist die erste Lichtquelle 5a dazu ausgebildet, um Licht vorzugsweise lediglich mit der ersten Wellenlänge und nicht mit der zweiten Wellenlänge zu erzeugen und mittig in die erste Messkammer 3 einzukoppeln. Die zweite Lichtquelle 5b ist dazu ausgebildet, um Licht vorzugsweise lediglich mit der zweiten Wellenlänge und nicht mit der ersten Wellenlänge zu erzeugen und mittig in die zweite Messkammer 4 einzukoppeln. **In** diesem Ausführungsbeispiel ist daher keine erste bzw. zweite Filteranordnung 10, 11 notwendig. Weiterhin umfasst die Detektionseinrichtung 9 einen Bildsensor, der dazu ausgebildet ist, sowohl Licht aus der ersten Messkammer 3 mit der ersten Wellenlänge als auch Licht aus der zweiten Messkammer 4 mit der zweiten Wellenlänge in ein entsprechendes erstes Messergebnis und zweites Messergebnis umzuwandeln. Der Bildsensor ist in diesem Ausführungsbeispiel als Flächensensor ausgeführt und überdeckt sowohl die zweite Stirnseite der ersten Messkammer 3 als auch die zweite Stirnseite der zweiten Messkammer 4.

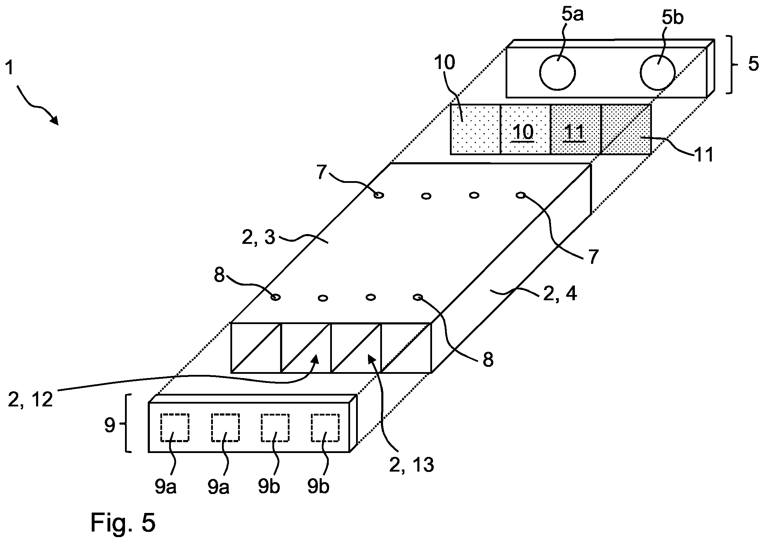

Figur 5 zeigt ein weiteres Ausführungsbeispiel der spektroskopischen Analysevorrichtung 1 mit der Mehrkammerküvette 2. Die Analysevorrichtung 1 umfasst die erste Messkammer 3 und die zweite Messkammer 4.weiterhin umfasst die Mehrkammerküvette eine erste Referenzmesskammer 12 und eine zweite Referenzmesskammer 13. Die Beleuchtungseinrichtung 5 ist dazu ausgebildet, um Licht in die zumindest eine erste und zweite Referenzmesskammer 12, 13 einzukoppeln. Die Detektionseinrichtung 9 ist dazu ausgebildet, um eine Intensität des durch die erste Referenzmesskammer 12 gestrahlten Lichts für die erste Wellenlänge zu messen und ein erstes Referenzmessergebnis zu erzeugen. Die Detektionseinrichtung 9 ist weiter dazu ausgebildet, um eine Intensität des durch die zweite Referenzmesskammer 13 gestrahlten Lichts für die zweite Wellenlänge zu messen und ein zweites Referenzmessergebnis zu erzeugen.

Die erste und die zweite Referenzmesskammer 12, 13 sind einerseits optisch voneinander und andererseits auch optisch von der ersten und zweiten Messkammer 3, 4 getrennt.

Die Detektionseinrichtung 9 ist dazu ausgebildet, um das erste Messergebnis mit dem ersten Referenzmessergebnis zu kompensieren. Die Detektionseinrichtung 9 ist weiter dazu ausgebildet, um das zweite Messergebnis mit dem zweiten Referenzmessergebnis zu kompensieren.

Die erste Referenzmesskammer 12 ist neben der ersten Messkammer 3 angeordnet. Die zweite Referenzmesskammer 13 ist neben der zweiten Messkammer 4 angeordnet.

Die erste Referenzmesskammer 12 ist vorzugsweise identisch zur ersten Messkammer 3 aufgebaut. Ergänzend oder alternativ ist die zweite Referenzmesskammer 13 identisch zur zweiten Messkammer 4 aufgebaut. In diesem Ausführungsbeispiel sind alle Messkammern 3, 4, 12, 13 identisch zueinander aufgebaut, insbesondere gleich lang. Vorzugsweise umfassen sie auch einen ähnlichen Querschnitt und ein ähnliches Volumen. Unter dem Wortlaut "ähnlich" können Abweichungen von vorzugsweise weniger als 20 % oder weniger als 10 % verstanden werden.

Die Beleuchtungseinrichtung 5 umfasst in diesem Ausführungsbeispiel eine erste Lichtquelle 5a und eine zweite Lichtquelle 5b. Sowohl die erste Lichtquelle 5a als auch die zweite Lichtquelle 5b sind dazu ausgebildet, um ein breitbandiges Licht zu erzeugen, welches sowohl die erste Wellenlänge als auch die zweite Wellenlänge umfasst. Die erste Lichtquelle 5a ist derart an der Mehrkammerküvette 2 angeordnet, dass sie das erzeugte Licht sowohl in die erste Messkammer 3 als auch in die erste Referenzmesskammer 12 einkoppelt. Die zweite Lichtquelle 5b ist derart an der Mehrkammerküvette 2 angeordnet, dass sie das erzeugte Licht sowohl in die zweite Messkammer 4 als auch in die zweite Referenzmesskammer 13 einkoppelt. Eine erste Filteranordnung 10 ist in diesem Ausführungsbeispiel zwischen der Beleuchtungseinrichtung 5 und der Mehrkammerküvette 2 angeordnet und dazu ausgebildet, um aus dem breitbandigen Licht, welches die erste Lichtquelle 5a erzeugt, die zweite Wellenlänge zu entfernen. In diesem Fall umfasst die erste Filteranordnung 10 zwei Filterelemente, wobei ein Filterelement die erste Messkammer 3 und das andere Filterelement die erste Referenzmesskammer 12 an der jeweiligen ersten Stirnseite verschließt. Eine zweite Filteranordnung 11 ist in diesem Ausführungsbeispiel zwischen der Beleuchtungseinrichtung 5 und der Mehrkammerküvette 2 angeordnet und dazu ausgebildet, um aus dem breitbandigen Licht, welches die zweite Lichtquelle 5b erzeugt, die erste Wellenlänge zu entfernen. In diesem Fall umfasst die zweite Filteranordnung 11 zwei Filterelemente, wobei ein Filterelement die zweite Messkammer 4 und das andere Filterelement die zweite Referenzmesskammer 13 an der jeweiligen ersten Stirnseite verschließt.

Weiterhin umfasst die Detektionseinrichtung 9 zwei erste Detektorelemente 9a, wobei je ein erstes Detektorelement 9a an je einer der zweiten Stirnseiten der ersten Messkammer 3 und der ersten Referenzmesskammer 12 angeordnet ist. Außerdem umfasst die Detektionseinrichtung 9 zwei zweite Detektorelemente 9b, wobei je ein zweites Detektorelement 9b an je einer der zweiten Stirnseiten der zweiten Messkammer 4 und der zweiten Referenzmesskammer 13 angeordnet ist.

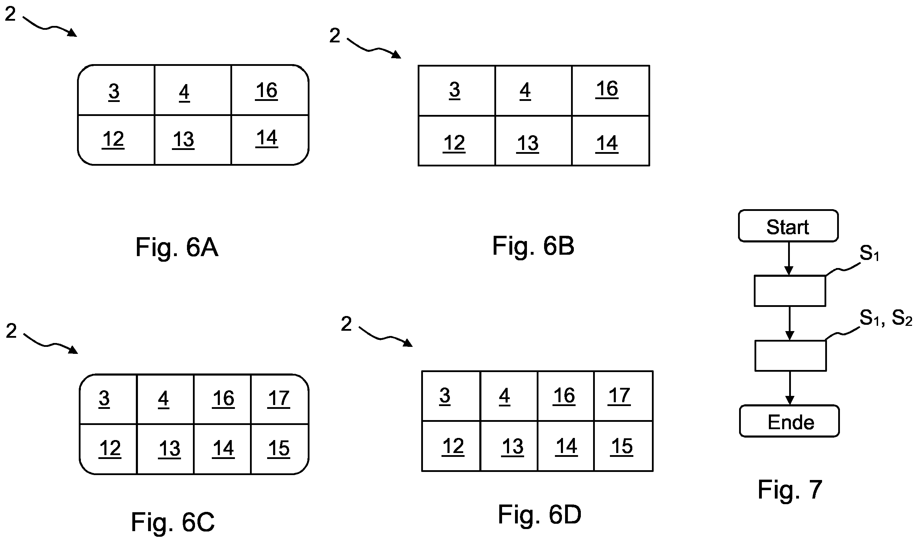

Die Figuren 6A, 6B, 6C und 6D zeigen verschiedene Querschnittsformen der Mehrkammerküvette 2 der spektroskopischen Analysevorrichtung 1. In Figur 6A umfasst die Mehrkammerküvette 2 eine erste, zweite und dritte Referenzmesskammer 12, 13, 14. Weiterhin umfasst die Mehrkammerküvette 2 eine erste, zweite und dritte Messkammer 3, 4, 16. Im Querschnitt können alle oder einige Messkammern 12, 13, 14, 3, 4, 16 abgerundete Eckenbereiche aufweisen.

Figur 6B zeigt ein ähnliches Ausführungsbeispiel für die Mehrkammerküvette 2 wie Figur 6A, wobei im Querschnitt alle Eckbereiche der einzelnen Messkammern 12, 13, 14, 3, 4, 16 nicht abgerundet, sondern eckig sind.

Figur 6C zeigt dasselbe Ausführungsbeispiel wie Figur 6A, nur dass die Mehrkammerküvette 2 eine erste, zweite, dritte und vierte Referenzmesskammer 12, 13, 14, 15 und eine erste, zweite, dritte und vierte Messkammer 3, 4, 16, 17 umfasst. Im Querschnitt können alle oder einige Messkammern 12, 13, 14, 15, 3, 4, 16, 17 abgerundete Eckenbereiche aufweisen.

Figur 6D zeigt ein ähnliches Ausführungsbeispiel für die Mehrkammerküvette 2 wie Figur 6B, wobei im Querschnitt alle Eckbereiche der einzelnen Messkammern 12, 13, 14, 15, 3, 4, 16, 17 nicht abgerundet, sondern eckig sind.

In den Figuren 6A, 6B, 6C, 6D ist die Mehrkammerküvette 2 ein einteiliges Strangpressteil.

Figur 7 beschreibt ein Verfahren zur spektroskopischen Analyse von Fluid oder Gas mit einer Mehrkammerküvette 2, wobei die Mehrkammerküvette 2 zumindest zwei Messkammern 3, 4 umfasst, in das Fluid oder Gas zur Analyse einbringbar ist. Die zumindest zwei Messkammern 3, 4 sind optisch voneinander getrennt, wobei weiterhin eine Beleuchtungseinrichtung 4 und eine Detektionseinrichtung 9 vorgesehen sind. In einem ersten Verfahrensschritt S₁ wird Licht durch die Beleuchtungseinrichtung 5 erzeugt und in die erste und zweite Messkammer 3, 4 eingekoppelt. In einem zweiten Verfahrensschritt S₂ wird eine Intensität des durch das Fluid oder Gas in der ersten Messkammer 3 gestrahlten Lichts für eine erste Wellenlänge gemessen und ein erstes Messergebnis erzeugt. In einem dritten Verfahrensschritt S₃ wird eine Intensität des durch das Fluid oder Gas in der zweiten Messkammer 4 gestrahlten Lichts für eine zweite Wellenlänge gemessen und ein zweites Messergebnis erzeugt, wobei die erste Wellenlänge und die zweite Wellenlänge unterschiedlich sind.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar, sofern nicht etwas Gegenteiliges angegeben ist.

**Bezugszeichenliste**

| | |
|---|---|
| Spektroskopische Analysevorrichtung | 1 |
| Mehrkammerküvette | 2 |
| Erste Messkammer | 3 |
| Zweite Messkammer | 4 |
| Beleuchtungseinrichtung | 5 |
| Erste Lichtquelle | 5a |
| Zweite Lichtquelle | 5b |
| Erster Lichtwellenleiter | 6a |
| Zweiter Lichtwellenleiter | 6b |
| Eingangsanschluss | 7 |
| Ausgangsanschluss | 8 |
| Detektionseinrichtung | 9 |
| Erstes Detektorelement | 9a |
| Zweites Detektorelement | 9b |
| Erste Filteranordnung | 10 |
| Zweite Filteranordnung | 11 |
| Erste Referenzmesskammer | 12 |
| Zweite Referenzmesskammer | 13 |
| Dritte Referenzmesskammer | 14 |
| Vierte Referenzmesskammer | 15 |
| Dritte Messkammer | 16 |
| Vierte Messkammer | 17 |
| Verfahrensschritte | S₁, S₂, S₃ |

## Patentansprüche

1. Spektroskopische Analysevorrichtung (1) zur Fluid- oder Gasanalyse mit zumindest zwei Messkammern (3, 4, 16, 17), in die Fluid oder Gas zur Analyse einbringbar ist, wobei die zumindest zwei Messkammern (3, 4, 16, 17) optisch voneinander getrennt sind, wobei eine Beleuchtungseinrichtung (5) vorgesehen ist, die dazu ausgebildet ist, um Licht zu erzeugen und in die zumindest eine erste und zweite Messkammer (3, 4, 16, 17) einzukoppeln und wobei eine Detektionseinrichtung (9) vorgesehen ist, die dazu ausgebildet ist, um eine Intensität des durch das Fluid oder Gas in der ersten Messkammer (3) gestrahlten Lichts für eine erste Wellenlänge zu messen und ein erstes Messergebnis zu erzeugen und die weiter dazu ausgebildet ist, um eine Intensität des durch das Fluid oder Gas in der zweiten Messkammer (4) gestrahlten Lichts für eine zweite Wellenlänge zu messen und ein zweites Messergebnis zu erzeugen, wobei die erste Wellenlänge und die zweite Wellenlänge unterschiedlich sind,
**dadurch gekennzeichnet, dass**
die Analysevorrichtung (1) eine Mehrkammerküvette (2) umfasst, wobei die Mehrkammerküvette (2) die zumindest zwei Messkammern (3, 4, 16, 17) umfasst, wobei die Mehrkammerküvette (2) ein einteiliges Strangpressteil ist.

2. Spektroskopische Analysevorrichtung (1) nach Anspruch 1,
wobei die Detektionseinrichtung (9) dazu ausgebildet ist, um das erste Messergebnis und das zweite Messergebnis parallel zu erzeugen.

3. Spektroskopische Analysevorrichtung (1) nach einem der vorstehenden Ansprüche,
wobei die Mehrkammerküvette (2) zumindest eine erste und eine zweite Referenzmesskammer (12, 13, 14, 15) umfasst, wobei die Beleuchtungseinrichtung (5) dazu ausgebildet ist, um Licht in die zumindest eine erste und zweite Referenzmesskammer (3, 4, 16, 17) einzukoppeln und wobei die Detektionseinrichtung (9) dazu ausgebildet ist, um:
a) eine Intensität des durch die erste Referenzmesskammer (12) gestrahlten Lichts für die erste Wellenlänge zu messen und ein erstes Referenzmessergebnis zu erzeugen; und
b) eine Intensität des durch die zweite Referenzmesskammer (13) gestrahlten Lichts für die zweite Wellenlänge zu messen und ein zweites Referenzmessergebnis zu erzeugen.

4. Spektroskopische Analysevorrichtung (1) nach Anspruch 3,
wobei die erste und die zweite Referenzmesskammer (12, 13) optisch voneinander und optisch von der ersten und zweiten Messkammer (3, 4) getrennt sind.

5. Spektroskopische Analysevorrichtung (1) nach Anspruch 3 oder 4,
wobei die Detektionseinrichtung (9) dazu ausgebildet ist, um das erste Messergebnis mit dem ersten Referenzmessergebnis zu kompensieren und wobei die Detektionseinrichtung (9) dazu ausgebildet ist, um das zweite Messergebnis mit dem zweiten Referenzmessergebnis zu kompensieren.

6. Spektroskopische Analysevorrichtung (1) nach einem der Ansprüche 3 bis 5,
wobei die Detektionseinrichtung (9) dazu ausgebildet ist, um das erste Messergebnis zeitlich zu Mitteln und um das zweite Messergebnis zeitlich zu Mitteln.

7. Spektroskopische Analysevorrichtung (1) nach einem der Ansprüche 3 bis 6,
wobei die erste Messkammer (3) und die erste Referenzmesskammer (12) identisch zueinander aufgebaut sind und/oder wobei die zweite Messkammer (4) und die zweite Referenzmesskammer (13) identisch zueinander aufgebaut sind und/oder wobei die zumindest eine erste Messkammer (3) und die zweite Messkammer (4) identisch zueinander aufgebaut und/oder wobei die zumindest eine erste Referenzmesskammer (12) und die zweite Referenzmesskammer (13) identisch zueinander aufgebaut sind.

8. Spektroskopische Analysevorrichtung (1) nach einem der Ansprüche 3 bis 7,
wobei eine erste Filteranordnung (10) vorgesehen und dazu ausgebildet ist, um Wellenlängen aus dem von der Beleuchtungseinrichtung (5) erzeugtem Licht herauszufiltern, sodass das Licht, welches durch die erste Messkammer (3) und durch die erste Referenzmesskammer (12) gestrahlt wird, spätestens in der Detektionseinrichtung (9) nur noch die erste Wellenlänge beinhaltet und/oder wobei eine zweite Filteranordnung (11) vorgesehen und dazu ausgebildet ist, um Wellenlängen aus dem von der Beleuchtungseinrichtung (5) erzeugtem Licht herauszufiltern, sodass das Licht, welches durch die zweite Messkammer (4) und durch die zweite Referenzmesskammer (13) gestrahlt wird, spätestens in der Detektionseinrichtung (9) nur noch die zweite Wellenlänge beinhaltet.

9. Spektroskopische Analysevorrichtung (1) nach Anspruch 8,
wobei die Beleuchtungseinrichtung (5) dazu ausgebildet ist, um ein breitbandiges Licht zu erzeugen, welches zumindest Licht der ersten und der zweiten Wellenlänge beinhaltet.

10. Spektroskopische Analysevorrichtung (1) nach einem der Ansprüche 3 bis 8,
wobei die Beleuchtungseinrichtung (5) zumindest eine erste und eine zweite Lichtquelle (5a ,5b) umfasst, wobei die erste Lichtquelle (5a) dazu ausgebildet ist, um Licht mit lediglich der ersten Wellenlänge zu erzeugen, wobei die zumindest eine erste Lichtquelle (5a) dazu ausgebildet ist, um das erzeugte Licht in die erste Messkammer (3) und in die erste Referenzmesskammer (12) einzukoppeln und wobei die zweite Lichtquelle (5b) dazu ausgebildet ist, um Licht mit lediglich der zweiten Wellenlänge zu erzeugen, wobei die zumindest eine zweite Lichtquelle (5b) dazu ausgebildet ist, um das erzeugte Licht in die zweite Messkammer (4) und in die zweite Referenzmesskammer (13) einzukoppeln.

11. Spektroskopische Analysevorrichtung (1) nach einem der Ansprüche 3 bis 10, wobei die Beleuchtungseinrichtung (5) dazu ausgebildet ist, um Licht mit der ersten Wellenlänge in die erste Messkammer (3) und in die erste Referenzmesskammer (12) jeweils mittig einzukoppeln und um Licht mit der zweiten Wellenlänge in die zweite Messkammer (4) und in die zweite Referenzmesskammer (13) jeweils mittig einzukoppeln, wobei die mittige Einkopplung über je einen Lichtwellenleiter (6a, 6b) erfolgt, der jeweils im Zentrum einer ersten Stirnseite der jeweiligen Messkammer (3, 4) bzw. Referenzmesskammer (12, 13) angeordnet ist.

12. Spektroskopische Analysevorrichtung (1) nach einem der Ansprüche 3 bis 10,
wobei die Beleuchtungseinrichtung (5) zumindest eine erste Lichtquelle (5a) umfasst, die dazu ausgebildet ist, um erstes Licht mit der ersten Wellenlänge zu erzeugen und wobei die Beleuchtungseinrichtung (5) zumindest eine zweite Lichtquelle (5b) umfasst, die dazu ausgebildet ist, um zweites Licht mit der zweiten Wellenlänge zu erzeugen, wobei die erste Lichtquelle (5a) direkt derart an der ersten Messkammer (3) und der ersten Referenzmesskammer (12) angeordnet ist, sodass das erzeugte erste Licht sowohl in die erste Messkammer (3) als auch in die erste Referenzmesskammer (12) einstrahlt oder beabstandet zur ersten Messkammer (3) und ersten Referenzmesskammer (12) angeordnet ist, sodass das erzeugte erste Licht über je einen ersten Lichtwellenleiter (6a) der ersten Messkammer (3) und der ersten Referenzmesskammer (12) zuführbar ist und wobei die zweite Lichtquelle (5b) direkt derart an der zweiten Messkammer (4) und der zweiten Referenzmesskammer(13) angeordnet ist, sodass das erzeugte zweite Licht sowohl in die zweite Messkammer (4) als auch in die zweite Referenzmesskammer (13) einstrahlt oder beabstandet zur zweiten Messkammer (4) und zweiten Referenzmesskammer (13) angeordnet ist, sodass das erzeugte zweite Licht über je einen zweiten Lichtwellenleiter (6b) der zweiten Messkammer (4) und der zweiten Referenzmesskammer (13) zuführbar ist.

13. Spektroskopische Analysevorrichtung (1) nach einem der Ansprüche 3 bis 12,
wobei die Detektionseinrichtung (9) für:
a) die erste Messkammer (3) und die erste Referenzmesskammer (12) zur Detektion von Licht mit der ersten Wellenlänge jeweils eine Photodiode oder einen pyroelektrischen Detektor oder einen Bildsensor oder einen optopneumatischen Detektor umfasst; und/oder
die zweite Messkammer (4) und die zweite Referenzmesskammer (13) zur Detektion von Licht mit der zweiten Wellenlänge jeweils eine Photodiode oder einen pyroelektrischen Detektor oder einen Bildsensor oder einen optopneumatischen Detektor umfasst;
oder
b) die erste Messkammer (3) und die erste Referenzmesskammer (12) zur Detektion von Licht mit der ersten Wellenlänge einen gemeinsamen ersten Bildsensor umfasst, der dazu ausgebildet ist, um gleichzeitig sowohl das durch die erste Messkammer (3) als auch das durch die erste Referenzmesskammer (12) hindurchgestrahlte Licht zu empfangen;
und/oder
die zweite Messkammer (4) und die zweite Referenzmesskammer (13) zur Detektion von Licht mit der zweiten Wellenlänge einen gemeinsamen zweiten Bildsensor umfasst, der dazu ausgebildet ist, um gleichzeitig sowohl das durch die zweite Messkammer (4) als auch das durch die zweite Referenzmesskammer (13) hindurchgestrahlte Licht zu empfangen; oder
c) die erste Messkammer (3) und die erste Referenzmesskammer (12) zur Detektion von Licht mit der ersten Wellenlänge und für die zweite Messkammer (4) und die zweite Referenzmesskammer (13) zur Detektion von Licht mit der zweiten Wellenlänge einen gemeinsamen Bildsensor umfasst, der dazu ausgebildet ist, um gleichzeitig sowohl das durch die erste und zweite Messkammer (3, 4) als auch das durch die erste und zweite Referenzmesskammer (12, 13) hindurchgestrahlte Licht zu empfangen.

14. Verfahren zur spektroskopischen Analyse von Fluid oder Gas mit einer Mehrkammerküvette (2), wobei die Mehrkammerküvette (2) ein einteiliges Strangpressteil ist und zumindest zwei Messkammern (3, 4, 16, 17) umfasst, in das Fluid oder Gas zur Analyse einbringbar ist, wobei die zumindest zwei Messkammern (3, 4, 16, 17) optisch voneinander getrennt sind, wobei eine Beleuchtungseinrichtung (5) und eine Detektionseinrichtung (9) vorgesehen sind und wobei das Verfahren die folgenden Verfahrensschritte umfasst:
- Erzeugen (S₁) von Licht durch die Beleuchtungseinrichtung (5) und Einkoppeln des Lichts in die erste und zweite Messkammer (3, 4, 16, 17);
- Messen (S₂) einer Intensität des durch das Fluid oder Gas in der ersten Messkammer (3) gestrahlten Lichts für eine erste Wellenlänge und Erzeugen eines ersten Messergebnisses durch die Detektionseinrichtung (9);
- Messen (S₃) einer Intensität des durch das Fluid oder Gas in der zweiten Messkammer (4) gestrahlten Lichts für eine zweite Wellenlänge und Erzeugen eines zweiten Messergebnisses durch die Detektionseinrichtung (9), wobei die erste Wellenlänge und die zweite Wellenlänge unterschiedlich sind.

## Claims

1. A spectroscopic analysis apparatus (1) for fluid or gas analysis, comprising at least two measurement chambers (3, 4, 16, 17) into which fluid or gas can be introduced for analysis, wherein the at least two measurement chambers (3, 4, 16, 17) are optically separated from one another, wherein an illumination device (5) is provided that is configured to generate light and to couple the light into the at least one first and second measurement chamber (3, 4, 16, 17), and wherein a detection device (9) is provided that is configured to measure an intensity of the light radiated by the fluid or gas in the first measurement chamber (3) for a first wavelength and to generate a first measurement result and that is further configured to measure an intensity of the light radiated by the fluid or gas in the second measurement chamber (4) for a second wavelength and to generate a second measurement result, wherein the first wavelength and the second wavelength are different,
**characterized in that**
the analysis apparatus (1) comprises a multi-chamber cuvette (2), with the multi-chamber cuvette (2) comprising the at least two measurement chambers (3, 4, 16, 17), with the multi-chamber cuvette (2) being a single-piece extruded part.

2. A spectroscopic analysis apparatus (1) according to claim 1,
wherein the detection device (9) is configured to generate the first measurement result and the second measurement result in parallel.

3. A spectroscopic analysis apparatus (1) according to one of the preceding claims,
wherein the multi-chamber cuvette (2) comprises at least a first and a second reference measurement chamber (12, 13, 14, 15), wherein the illumination device (5) is configured to couple light into the at least one first and second reference measurement chamber (12, 13, 14, 15), and wherein the detection device (9) is configured:
a) to measure an intensity of the light radiated through the first reference measurement chamber (12) for the first wavelength and to generate a first reference measurement result; and
b) to measure an intensity of the light radiated through the second reference measurement chamber (13) for the second wavelength and to generate a second reference measurement result.

4. A spectroscopic analysis apparatus (1) according to claim 3,
wherein the first and the second reference measurement chamber (12, 13) are optically separated from one another and optically separated from the first and the second measurement chamber (3, 4).

5. A spectroscopic analysis apparatus (1) according to claim 3 or 4,
wherein the detection device (9) is configured to compensate the first measurement result with the first reference measurement result, and wherein the detection device (9) is configured to compensate the second measurement result with the second reference measurement result.

6. A spectroscopic analysis apparatus (1) according to any one of the claims 3 to 5,
wherein the detection device (9) is configured to average the first measurement result over time and to average the second measurement result over time.

7. A spectroscopic analysis apparatus (1) according to any one of the claims 3 to 6,
wherein the first measurement chamber (3) and the first reference measurement chamber (12) are designed identically to one another and/or wherein the second measurement chamber (4) and the second reference measurement chamber (13) are designed identically to one another and/or wherein the at least one first measurement chamber (3) and the second measurement chamber (4) are designed identically to one another and/or wherein the at least one first reference measurement chamber (12) and the second reference measurement chamber (13) are designed identically to one another.

8. A spectroscopic analysis apparatus (1) according to any one of the claims 3 to 7,
wherein a first filter arrangement (10) is provided and is configured to filter out wavelengths from the light generated by the illumination device (5) so that the light which is radiated through the first measurement chamber (3) and through the first reference measurement chamber (12) only includes the first wavelength at the latest in the detection device (9) and/or wherein a second filter arrangement (11) is provided and is configured to filter out wavelengths from the light generated by the illumination device (5) so that the light which is radiated through the second measurement chamber (4) and through the second reference measurement chamber (13) only includes the second wavelength at the latest in the detection device (9).

9. A spectroscopic analysis apparatus (1) according to claim 8,
wherein the illumination device (5) is configured to generate a broadband light which at least includes light of the first and the second wavelength.

10. A spectroscopic analysis apparatus (1) according to any one of the claims 3 to 8,
wherein the illumination device (5) comprises at least a first and a second light source (5a, 5b), wherein the first light source (5a) is configured to generate light with only the first wavelength, wherein the at least one first light source (5a) is configured to couple the generated light into the first measurement chamber (3) and into the first reference measurement chamber (12), and wherein the second light source (5b) is configured to generate light with only the second wavelength, wherein the at least one second light source (5b) is configured to couple the generated light into the second measurement chamber (4) and into the second reference measurement chamber (13).

11. A spectroscopic analysis apparatus (1) according to any one of the claims 3 to 10, wherein the illumination device (5) is configured to couple light with the first wavelength centrally into the first measurement chamber (3) and into the first reference measurement chamber (12) in each case and to couple light with the second wavelength centrally into the second measurement chamber (4) and into the second reference measurement chamber (13) in each case, wherein the central coupling in takes place via a respective optical waveguide (6a, 6b) which is in each case arranged at the center of a first end face of the respective measurement chamber (3, 4) or reference measurement chamber (12, 13).

12. A spectroscopic analysis apparatus (1) according to any one of the claims 3 to 10,
wherein the illumination device (5) comprises at least a first light source (5a) which is configured to generate a first light with the first wavelength, and wherein the illumination device (5) comprises at least a second light source (5b) which is configured to generate a second light with the second wavelength, wherein the first light source (5a) is arranged directly at the first measurement chamber (3) and the first reference measurement chamber (12) such that the generated first light radiates into both the first measurement chamber (3) and the first reference measurement chamber (12) or is arranged spaced apart from the first measurement chamber (3) and the first reference measurement chamber (12) so that the generated first light can be fed via a respective first optical waveguide (6a) to the first measurement chamber (3) and the first reference measurement chamber (12), and wherein the second light source (5b) is arranged directly at the second measurement chamber (4) and the second reference measurement chamber (13) such that the generated second light radiates into both the second measurement chamber (4) and the second reference measurement chamber (13) or is arranged spaced apart from the second measurement chamber (4) and the second reference measurement chamber (13) so that the generated second light can be fed via a respective second optical waveguide (6b) to the second measurement chamber (4) and the second reference measurement chamber (13).

13. A spectroscopic analysis apparatus (1) according to any one of the claims 3 to 12,
wherein the detection device (9) comprises:
a) for the first measurement chamber (3) and the first reference measurement chamber (12) for detecting light with the first wavelength, in each case a photodiode or a pyroelectric detector or an image sensor or an optopneumatic detector; and/or
for the second measurement chamber (4) and the second reference measurement chamber (13) for detecting light with the second wavelength, in each case a photodiode or a pyroelectric detector or an image sensor or an optopneumatic detector;
or
b) for the first measurement chamber (3) and the first reference measurement chamber (12) for detecting light with the first wavelength, a common first image sensor which is configured to simultaneously receive both the light radiated through the first measurement chamber (3) and the light radiated through the first reference measurement chamber (12);
and/or
for the second measurement chamber (4) and the second reference measurement chamber (13) for detecting light with the second wavelength, a common second image sensor which is configured to simultaneously receive both the light radiated through the second measurement chamber (4) and the light radiated through the second reference measurement chamber (13); or
c) for the first measurement chamber (3) and the first reference measurement chamber (12) for detecting light with the first wavelength and for the second measurement chamber (4) and the second reference measurement chamber (13) for detecting light with the second wavelength, a common image sensor which is configured to simultaneously receive both the light radiated through the first and second measurement chamber (3, 4) and the light radiated through the first and second reference measurement chamber (12, 13).

14. A method for the spectroscopic analysis of fluid or gas using a multi-chamber cuvette (2), wherein the multi-chamber cuvette (2) is a single-piece extruded part and comprises at least two measurement chambers (3, 4, 16, 17) into which fluid or gas can be introduced for analysis, wherein the at least two measurement chambers (3, 4, 16, 17) are optically separated from one another, wherein an illumination device (5) and a detection device (9) are provided and wherein the method comprises the following method steps:
- generating (S₁) light by the illumination device (5) and coupling the light into the first and second measurement chamber (3, 4, 16, 17);
- measuring (S₂) an intensity of the light radiated by the fluid or gas in the first measurement chamber (3) for a first wavelength and generating a first measurement result by the detection device (9);
- measuring (S₃) an intensity of the light radiated by the fluid or gas in the second measurement chamber (4) for a second wavelength and generating a second measurement result by the detection device (9), wherein the first wavelength and the second wavelength are different.

## Revendications

1. Dispositif d'analyse spectroscopique (1) pour l'analyse de fluides ou de gaz, comprenant au moins deux chambres de mesure (3, 4, 16, 17) dans lesquelles un fluide ou un gaz à analyser peut être introduit, lesdites au moins deux chambres de mesure (3, 4, 16, 17) étant séparées optiquement l'une de l'autre, un dispositif d'éclairage (5) étant prévu, qui est conçu pour générer de la lumière et pour l'injecter dans ladite au moins une première et une deuxième chambre de mesure (3, 4, 16, 17), et un dispositif de détection (9) étant prévu, qui est conçu pour mesurer une intensité de la lumière, rayonnée à travers le fluide ou le gaz dans la première chambre de mesure (3), pour une première longueur d'onde et pour générer un premier résultat de mesure, et qui est en outre conçu pour mesurer une intensité de la lumière, rayonnée à travers le fluide ou le gaz dans la deuxième chambre de mesure (4), pour une deuxième longueur d'onde et pour générer un deuxième résultat de mesure, la première longueur d'onde et la deuxième longueur d'onde étant différentes,
**caractérisé en ce que**
le dispositif d'analyse (1) comprend une cuvette à plusieurs chambres (2), la cuvette à plusieurs chambres (2) comprenant lesdites au moins deux chambres de mesure (3, 4, 16, 17), la cuvette à plusieurs chambres (2) étant une pièce extrudée d'un seul tenant.

2. Dispositif d'analyse spectroscopique (1) selon la revendication 1,
dans lequel le dispositif de détection (9) est conçu pour générer en parallèle le premier résultat de mesure et le deuxième résultat de mesure.

3. Dispositif d'analyse spectroscopique (1) selon l'une des revendications précédentes,
dans lequel la cuvette à plusieurs chambres (2) comprend au moins une première et une deuxième chambres de mesure de référence (12, 13, 14, 15), le dispositif d'éclairage (5) étant conçu pour injecter de la lumière dans ladite au moins une première et une deuxième chambre de mesure de référence (3, 4, 16, 17), et le dispositif de détection (9) étant conçu pour :
a) mesurer une intensité de la lumière, rayonnée à travers la première chambre de mesure de référence (12), pour la première longueur d'onde et pour générer un premier résultat de mesure de référence ; et
b) mesurer une intensité de la lumière, rayonnée à travers la deuxième chambre de mesure de référence (13), pour la deuxième longueur d'onde et pour générer un deuxième résultat de mesure de référence.

4. Dispositif d'analyse spectroscopique (1) selon la revendication 3,
dans lequel les première et deuxième chambres de mesure de référence (12, 13) sont séparées optiquement l'une de l'autre et sont séparées optiquement des première et deuxième chambres de mesure (3, 4).

5. Dispositif d'analyse spectroscopique (1) selon la revendication 3 ou 4,
dans lequel le dispositif de détection (9) est conçu pour compenser le premier résultat de mesure avec le premier résultat de mesure de référence, et le dispositif de détection (9) est conçu pour compenser le deuxième résultat de mesure avec le deuxième résultat de mesure de référence.

6. Dispositif d'analyse spectroscopique (1) selon l'une des revendications 3 à 5,
dans lequel le dispositif de détection (9) est conçu pour faire la moyenne temporelle du premier résultat de mesure et pour faire la moyenne temporelle du deuxième résultat de mesure.

7. Dispositif d'analyse spectroscopique (1) selon l'une des revendications 3 à 6,
dans lequel la première chambre de mesure (3) et la première chambre de mesure de référence (12) sont de construction identique, et/ou la deuxième chambre de mesure (4) et la deuxième chambre de mesure de référence (13) sont de construction identique, et/ou
ladite au moins une première chambre de mesure (3) et la deuxième chambre de mesure (4) sont de construction identique, et/ou ladite au moins une première chambre de mesure de référence (12) et la deuxième chambre de mesure de référence (13) sont de construction identique.

8. Dispositif d'analyse spectroscopique (1) selon l'une des revendications 3 à 7,
dans lequel est prévu un premier moyen de filtrage (10) qui est conçu pour filtrer les longueurs d'onde de la lumière générée par le dispositif d'éclairage (5) de telle sorte que la lumière, rayonnée à travers la première chambre de mesure (3) et à travers la première chambre de mesure de référence (12), ne contienne plus que la première longueur d'onde au plus tard dans le dispositif de détection (9), et/ou
il est prévu un deuxième moyen de filtrage (11) qui est conçu pour filtrer les longueurs d'onde de la lumière générée par le dispositif d'éclairage (5), de sorte que la lumière, rayonnée à travers la deuxième chambre de mesure (4) et à travers la deuxième chambre de mesure de référence (13), ne contienne plus que la deuxième longueur d'onde au plus tard dans le dispositif de détection (9).

9. Dispositif d'analyse spectroscopique (1) selon la revendication 8,
dans lequel le dispositif d'éclairage (5) est conçu pour générer une lumière à large bande qui contient au moins la lumière de la première et de la deuxième longueur d'onde.

10. Dispositif d'analyse spectroscopique (1) selon l'une des revendications 3 à 8,
dans lequel le dispositif d'éclairage (5) comprend au moins une première et une deuxième source lumineuse (5a , 5b), la première source lumineuse (5a) étant conçue pour générer une lumière ayant uniquement la première longueur d'onde, ladite au moins une première source lumineuse (5a) étant conçue pour injecter la lumière générée dans la première chambre de mesure (3) et dans la première chambre de mesure de référence (12), et la deuxième source lumineuse (5b) étant conçue pour générer une lumière ayant uniquement la deuxième longueur d'onde, ladite au moins une deuxième source lumineuse (5b) étant conçue pour injecter la lumière générée dans la deuxième chambre de mesure (4) et dans la deuxième chambre de mesure de référence (13).

11. Dispositif d'analyse spectroscopique (1) selon l'une des revendications 3 à 10,
dans lequel le dispositif d'éclairage (5) est conçu pour injecter de manière centrée la lumière de première longueur d'onde dans la première chambre de mesure (3) et dans la première chambre de mesure de référence (12) et pour injecter de manière centrée la lumière de deuxième longueur d'onde dans la deuxième chambre de mesure (4) et dans la deuxième chambre de mesure de référence (13),
l'injection centrée s'effectue via un guide d'ondes lumineuses (6a, 6b) respectif qui est disposé au centre d'une première face frontale de la chambre de mesure (3, 4) respective ou de la chambre de mesure de référence (12, 13) respective.

12. Dispositif d'analyse spectroscopique (1) selon l'une des revendications 3 à 10,
dans lequel le dispositif d'éclairage (5) comprend au moins une première source lumineuse (5a) conçue pour générer une première lumière ayant la première longueur d'onde, et
le dispositif d'éclairage (5) comprend au moins une deuxième source lumineuse (5b) conçue pour générer une deuxième lumière ayant la deuxième longueur d'onde,
la première source lumineuse (5a) est disposée directement sur la première chambre de mesure (3) et sur la première chambre de mesure de référence (12), de sorte que la première lumière générée est rayonnée à la fois dans la première chambre de mesure (3) et dans la première chambre de mesure de référence (12), ou est disposée à distance de la première chambre de mesure (3) et de la première chambre de mesure de référence (12), de sorte que la première lumière générée peut être amenée à la première chambre de mesure (3) et à la première chambre de mesure de référence (12) par l'intermédiaire d'un premier guide d'ondes lumineuses (6a) respectif, et
la deuxième source lumineuse (5b) est disposée directement sur la deuxième chambre de mesure (4) et sur la deuxième chambre de mesure de référence (13), de sorte que la deuxième lumière générée est rayonnée à la fois dans la deuxième chambre de mesure (4) et dans la deuxième chambre de mesure de référence (13), ou est disposée à distance de la deuxième chambre de mesure (4) et de la deuxième chambre de mesure de référence (13), de sorte que la deuxième lumière générée peut être amenée à la deuxième chambre de mesure (4) et à la deuxième chambre de mesure de référence (13) par l'intermédiaire d'un deuxième guide d'ondes lumineuses (6b) respectif.

13. Dispositif d'analyse spectroscopique (1) selon l'une des revendications 3 à 12,
dans lequel le dispositif de détection (9) comprend :
a) une photodiode ou un détecteur pyroélectrique ou un capteur d'image ou un détecteur opto-pneumatique pour la première chambre de mesure (3) et pour la première chambre de mesure de référence (12), afin de détecter la lumière ayant la première longueur d'onde; et/ou
une photodiode ou un détecteur pyroélectrique ou un capteur d'image ou un détecteur opto-pneumatique pour la deuxième chambre de mesure (4) et pour la deuxième chambre de mesure de référence (13), afin de détecter la lumière ayant la deuxième longueur d'onde ;
ou
b) un premier capteur d'image commun pour la première chambre de mesure (3) et pour la première chambre de mesure de référence (12), afin de détecter la lumière ayant la première longueur d'onde, ledit capteur étant conçu pour recevoir simultanément la lumière rayonnée à travers la première chambre de mesure (3) et la lumière rayonnée à travers la première chambre de mesure de référence (12) ; et/ou
un deuxième capteur d'image commun pour la deuxième chambre de mesure (4) et pour la deuxième chambre de mesure de référence (13), afin de détecter la lumière ayant la deuxième longueur d'onde, ledit capteur étant conçu pour recevoir simultanément la lumière rayonnée à travers la deuxième chambre de mesure (4) et la lumière rayonnée à travers la deuxième chambre de mesure de référence (13) ; ou
c) un capteur d'image commun pour la première chambre de mesure (3) et pour la première chambre de mesure de référence (12), afin de détecter la lumière ayant la première longueur d'onde et, pour la deuxième chambre de mesure (4) et pour la deuxième chambre de mesure de référence (13), afin de détecter la lumière ayant la deuxième longueur d'onde, ledit capteur étant conçu pour recevoir simultanément la lumière rayonnée à travers les première et deuxième chambres de mesure (3, 4) et la lumière rayonnée à travers les première et deuxième chambres de mesure de référence (12, 13).

14. Procédé d'analyse spectroscopique de fluides ou de gaz à l'aide d'une cuvette à plusieurs chambres (2), la cuvette à plusieurs chambres (2) étant une pièce extrudée d'un seul tenant et comprenant au moins deux chambres de mesure (3, 4, 16, 17) dans lesquelles un fluide ou un gaz à analyser peut être introduit, lesdites au moins deux chambres de mesure (3, 4, 16, 17) étant séparées optiquement l'une de l'autre, un dispositif d'éclairage (5) et un dispositif de détection (9) étant prévus, et le procédé comprenant les étapes suivantes consistant à :
- générer (S₁) de la lumière par le dispositif d'éclairage (5), et injecter la lumière dans les première et deuxième chambres de mesure (3, 4, 16, 17) ;
- mesurer (S₂) une intensité de la lumière, rayonnée à travers le fluide ou le gaz dans la première chambre de mesure (3), pour une première longueur d'onde, et générer un premier résultat de mesure par le dispositif de détection (9) ;
- mesurer (S₃) une intensité de la lumière, rayonnée à travers le fluide ou le gaz dans la deuxième chambre de mesure (4), pour une deuxième longueur d'onde, et générer un deuxième résultat de mesure par le dispositif de détection (9), la première longueur d'onde et la deuxième longueur d'onde étant différentes.
